# EUROPÄISCHE PATENTANMELDUNG

(11) **EP 3 754 744 A1**
(43) Veröffentlichungstag der Anmeldung: **23.12.2020**
(21) Anmeldenummer: 19180418.6
(22) Anmeldetag: 17.06.2019
(51) Int. Cl.: H01M 2/10, H01M 10/625, H01M 10/6551, H01M 10/6554, H01M 10/653

(54) **VERFAHREN ZUM HERSTELLEN EINER THERMISCHEN SCHNITTSTELLE IN EINER BATTERIE FÜR EIN KRAFTFAHRZEUG UND BATTERIE FÜR EIN KRAFTFAHRZEUG**

(71) Anmelder: Lisa Dräxlmaier GmbH, 84137 Vilsbiburg (DE)
(72) Erfinder: Magunia, Robert, 84144 Geisenhausen (DE); Römelsberger, Michael, 84323 Massing (DE); Pogadl, Nina, 84036 Landshut (DE); Eggemann, Thomas, 84137 Vilsbiburg (DE)

(57) **Zusammenfassung**

Die Erfindung betrifft ein Verfahren zum Herstellen einer thermischen Schnittstelle in einer Batterie (10) für ein Kraftfahrzeug, umfassend die Schritte: Bereitstellen wenigstens eines Batteriemoduls (12) mit zumindest einem Einlasskanal (14), welcher an einer Batteriemodulseite (16) in zumindest einer Einlassöffnung (18) für ein Wärmeleitmaterial (46) mündet, und mit zumindest einem Auslasskanal (20), welcher an der Batteriemodulseite (16) in zumindest einer Auslassöffnung (22) für das Wärmeleitmaterial (46) mündet; Bereitstellen einer Aufnahmestruktur (24) mit einem eine Wärmeübertragungsfläche (26) aufweisenden Aufnahmebereich zum Aufnehmen des Batteriemoduls (12) in einer bestimmungsgemäßen Einbaulage, in welcher zwischen der Batteriemodulseite (16) und der Wärmeübertragungsfläche (26) ein Spalt (34) besteht; Aufbringen wenigstens einer flexiblen linienförmigen Abdichtung (42) an der Batteriemodulseite (16) oder der Wärmeübertragungsfläche (26); Montieren des Batteriemoduls (12) in der bestimmungsgemäßen Einbaulage unter Komprimierung der Abdichtung (42), wonach diese innerhalb des Spalts (34) einen Hohlraum (44) zwischen der Batteriemodulseite (16) und der Wärmeübertragungsfläche (26) einschließt; Befüllen des Hohlraums (44) mit dem Wärmeleitmaterial (46) durch die Einlassöffnung (18), wobei das in den Hohlraum (44) eingebrachte Wärmeleitmaterial (46) die thermische Schnittstelle bildet. Die Erfindung betrifft des Weiteren eine Batterie (10) für ein Kraftfahrzeug.

## Beschreibung

### Technisches Gebiet

Die vorliegende Erfindung betrifft ein Verfahren zum Herstellen einer thermischen Schnittstelle in einer Batterie für ein Kraftfahrzeug sowie eine Batterie für ein Kraftfahrzeug.

### Stand der Technik

In Batteriesystemen von Kraftfahrzeugen werden üblicherweise sogenannte thermische Interface-Materialien bzw. Gapfiller, ganz allgemein also Wärmeleitmaterialen, zur Wärmeabfuhr und Wärmezufuhr zum Toleranzausgleich bei vorhandenen Spalten verwendet. Um den Wärmeübergang bei sämtlichen Toleranzlagen sicherzustellen, erfolgt die Dosierung solcher Wärmeleitmaterialen in der Regel auf das maximal mögliche Spaltmaß und damit meistens auf einen relativ hohen Überfüllgrad bezüglich einer Nominal- und vor allem einer Minimaltoleranz.

Üblicherweise umfassen Batterien für Kraftfahrzeuge mehrere Batteriemodule, in denen oftmals mehrere Batteriezellen zusammengefasst sind. Derartige Batteriemodule werden von Aufnahmestrukturen, beispielsweise in Form von Batterierahmen oder dergleichen aufgenommen. Solche Aufnahmestrukturen können Wärmeübertragungsflächen, beispielsweise in Form von Schottplatten als Zwischenschicht, Kühlplatten, anderweitige Kühlstrukturen oder ganz allgemein Wärmesenken, aufweisen, über welche überschüssige Wärme von den Batteriezellen und somit von den Batteriemodulen zu einem Kühlsystem der Batterie abgeführt werden soll. Aufgrund von Fertigungstoleranzen ergeben sich bei Batterien beispielsweise unterschiedliche Formen und Lagen von Schottplatten, Batterierahmen, Unterseiten von Batteriemodulen und unterschiedliche Positionen von Anbindungspunkten an Batterierahmen und Batteriemodulen.

Dadurch, dass oftmals ein gewisser Überfüllgrad an Wärmeleitmaterial, also in Form von thermischem Interface-Material oder Gapfiller, in Kauf genommen wird, können teilweise sehr hohe Kräfte beim Montieren, vor allem beim Setzen, der Batteriemodule auftreten, wenn diese das bereits aufgetragene Wärmeleitmaterial verpressen und verdrängen.

Zudem kann es auch passieren, dass sehr lange Prozesszeiten in Kauf genommen werden müssen, da das Verpressen des bereits aufgetragenen Wärmeleitmaterials nur sehr langsam möglich ist, um die dabei auftretenden Kräfte gering zu halten und die Strukturen, insbesondere die betreffenden Batteriemodule und Aufnahmestrukturen für Batteriemodule, nicht zu beschädigen.

Bei einer zu geringen Befüllung mit Wärmeleitmaterial, also wenn der zu befüllende Spalt nicht ausreichend mit dem Wärmeleitmaterial ausgefüllt wurde, bestünde das Risiko einer sehr schlechten thermischen Performance des zugehörigen Kühlsystems. Eine Unterdosierung mit Wärmeleitmaterial ist also ebenfalls unvorteilhaft.

Weiterhin ist die Überfüllung mit Wärmeleitmaterial mit einem hohen Materialeinsatz und damit hohen Kosten verbunden. Außerdem stellt dies auch eine Ressourcenverschwendung dar und führt so zu einer schlechten Umweltbilanz. Zudem weisen üblicherweise eingesetzte Wärmeleitmaterialien eine Dichte von zumeist mehr als 2 g/cm³ auf, haben also ein relativ hohes Gewicht, welches das betreffende Kraftfahrzeug über seine Lebensdauer mittragen muss, was sich entsprechend negativ auf die Energiebilanz des Kraftfahrzeugs auswirkt.

Die EP 3 410 513 A1 zeigt ein Verfahren zum Einbringen einer Wärmeleitpaste in eine Batteriemodulbaugruppe, welche ein Batteriemodul und eine Kühlplatte aufweist. Die Kühlplatte und das Batteriemodul haben jeweilige Einfüllöffnungen für die Wärmeleitpaste, wobei die Einfüllöffnungen übereinander angeordnet sind. Die Wärmeleitpaste wird durch diese Einfüllöffnungen eingefüllt und gelangt so in einen Kanal im Inneren des Batteriemoduls. Von dort kann die Wärmeleitpaste über Austrittsöffnungen an einer Unterseite des Batteriemoduls in einen zweiten Kanal gelangen, welcher sich zwischen der Unterseite des Batteriemoduls und einer Oberseite der Kühlplatte befindet. Von dort aus kann die Wärmeleitpaste durch Austrittsöffnungen, welche durch die Kühlplatte verlaufen und an ihrer vom Batteriemodul abgewandten Unterseite münden, aus der Kühlplatte austreten.

### Beschreibung der Erfindung

Es ist die Aufgabe der vorliegenden Erfindung, eine Lösung bereitzustellen, mittels welcher wenigstens eine thermische Schnittstelle in einer Batterie für ein Kraftfahrzeug möglichst effektiv bereitgestellt werden kann.

Diese Aufgabe wird durch ein Verfahren zum Herstellen einer thermischen Schnittstelle in einer Batterie für ein Kraftfahrzeug sowie durch eine Batterie für ein Kraftfahrzeug mit den Merkmalen der unabhängigen Patentansprüche gelöst. Weitere mögliche Ausgestaltungen der Erfindung sind insbesondere in den abhängigen Ansprüchen angegeben.

Das erfindungsgemäße Verfahren zum Herstellen einer thermischen Schnittstelle in einer Batterie für ein Kraftfahrzeug umfasst folgende Schritte: Bereitstellen wenigstens eines Batteriemoduls mit zumindest einem Einlasskanal, welcher an einer Batteriemodulseite in zumindest einer Einlassöffnung für ein Wärmeleitmaterial mündet, und mit zumindest einem Auslasskanal, welcher an der Batteriemodulseite in zumindest einer Auslassöffnung für das Wärmeleitmaterial mündet; Bereitstellen einer Aufnahmestruktur mit einem eine Wärmeübertragungsfläche aufweisenden Aufnahmebereich zum Aufnehmen des Batteriemoduls in einer bestimmungsgemäßen Einbaulage, in welcher zwischen der Batteriemodulseite und der Wärmeübertragungsfläche ein Spalt besteht; Aufbringen wenigstens einer flexiblen linienförmigen Abdichtung an der Batteriemodulseite oder der Wärmeübertragungsfläche; Montieren des Batteriemoduls in der bestimmungsgemäßen Einbaulage unter Komprimierung der Abdichtung, wonach diese innerhalb des Spalts einen Hohlraum zwischen der Batteriemodulseite und der Wärmeübertragungsfläche einschließt; Befüllen des Hohlraums mit dem Wärmeleitmaterial durch die Einlassöffnung, wobei das in den Hohlraum eingebrachte Wärmeleitmaterial die thermische Schnittstelle bildet.

Durch den Einlasskanal kann also das Wärmeleitmaterial dem Hohlraum zugeführt werden, da der Einlasskanal an der besagten Batteriemodulseite in die zumindest eine Einlassöffnung mündet. Das Wärmeleitmaterial strömt also durch die Einlassöffnung in den Hohlraum und gelangt spätestens wenn der Hohlraum vollständig von dem Wärmeleitmaterial ausgefüllt wird zur Auslassöffnung in der Batteriemodulseite. Die Einlassöffnung und die Auslassöffnung können an entgegengesetzten Endbereichen in den Hohlraum münden. Von der Auslassöffnung aus kann das Wärmeleitmaterial, sofern überschüssiges Wärmeleitmaterial vorhanden sein sollte, in den Auslasskanal gelangen. Die Auslassöffnung dient zudem zur Entlüftung, sodass im Hohlraum vorhandene Luft einfach verdrängt werden kann. Da in der bestimmungsgemäßen Einbaulage des Batteriemoduls die Abdichtung innerhalb des Spalts den besagten Hohlraum einschließt, kann das eingebrachte Wärmeleitmaterial ausschließlich durch die zumindest eine Auslassöffnung den Hohlraum verlassen. Dies begünstigt einerseits eine vollständige Befüllung des Hohlraums, andererseits wird dadurch verhindert, dass das eingebrachte Wärmleitmaterial zwischen dem Batteriemodul und der Aufnahmestruktur herausquillt.

Die Abdichtung ist also zumindest so gestaltet und von ihren Eigenschaften her so beschaffen, dass diese im montierten Zustand des Batteriemoduls zumindest im Hinblick auf das Wärmeleitmaterial dicht ist. Die flexible linienförmige Abdichtung kann den besagten Hohlraum auch luftdicht abschließen. Dadurch, dass die Abdichtung zudem flexibel ist, kann diese unterschiedlichste Toleranzen bei der Montage des Batteriemoduls ausgleichen. Sowohl am Batteriemodul als auch an der Aufnahmestruktur kann es insbesondere fertigungsbedingt zu Maßschwankungen und Lageschwankungen kommen. Letztere können beispielsweise die Lage von Anbindungspunkten bzw. Schraubpunkten betreffen, welche dazu dienen können, das Batteriemodul in der bestimmungsgemäßen Einbaulage an der Aufnahmestruktur zu befestigen. Die flexible linienförmige Abdichtung wird so hoch bzw. so dick aufgetragen, dass diese vor der Montage des Batteriemoduls höher bzw. dicker als der Spalt ist, welcher sich zwischen der Batteriemodulseite und der Wärmeübertragungsfläche der Aufnahmestruktur in der bestimmungsgemäßen Einbaulage einstellt. In Folge dessen wird beim Montieren des Batteriemoduls die flexible linienförmige Abdichtung komprimiert und kann dadurch verschiedenste Toleranzen, also Maßschwankungen und Lagetoleranzen ausgleichen und den besagten Hohlraum abdichten.

Die thermische Schnittstelle wird also durch das in den Hohlraum eingebrachte Wärmeleitmaterial gebildet. Die thermische Schnittstelle dient dabei sowohl als Gapfiller als auch zur thermischen Anbindung des Batteriemoduls an die Wärmeübertragungsfläche der Aufnahmestruktur. Die Wärmeübertragungsfläche kann beispielsweise Bestandteil einer Kühlplatte sein, welche dazu dient, überschüssige Wärme vom Batteriemodul abzuführen bzw. Wärme zu dem Batteriemodul hinzuführen. Bei der Wärmeübertragungsfläche kann es sich beispielsweis auch um eine Schottplatte oder dergleichen handeln, welche an eine Kühlplatte angrenzt.

Da die Montage des Batteriemoduls an der Aufnahmestruktur noch vor dem Einbringen des Wärmeleitmaterials erfolgt, wirken sehr geringe Kräfte sowohl auf das Batteriemodul als auch auf die Aufnahmestruktur. Das Batteriemodul kann beispielsweise an vorkonstruierten Anschraub- und/oder Anschweißpunkten der Aufnahmestruktur befestigt werden, um das Batteriemodul in der bestimmungsgemäßen Einbaulage an der Aufnahmestruktur zu befestigen. Im Gegensatz zu gängigen Lösungen ist es also vorgesehen, das Wärmeleitmaterial zuvor weder an der Batteriemodulseite noch an der Wärmeübertragungsfläche aufzutragen. Folglich muss auch kein Wärmeleitmaterial beim Montieren des Batteriemoduls verdrängt werden. Dadurch wirken auf das Batteriemodul und auf die Aufnahmestruktur keine erhöhten Kräfte, welche ansonsten aus der Verdrängung bzw. Verpressung des zuvor aufgetragenen Wärmeleitmaterials resultieren würden.

Mittels des erfindungsgemäßen Verfahrens ist es möglich, insbesondere auch hochviskose Wärmeleitmaterialien in den besagten Hohlraum einzubringen. Dabei kann eine blasenfreie und vollständige Befüllung des Hohlraums, welcher zwischen der Batteriemodulseite und der Wärmeübertragungsfläche der Aufnahmestruktur eingeschlossen wird, sichergestellt werden. Prinzipiell können jegliche Arten von flüssigen bzw. pastösen Wärmeleitmaterialien bei dem erfindungsgemäßen Verfahren eingesetzt werden. Zudem ist es möglich, unabhängig von der Art der jeweiligen Oberflächen der Batteriemodulseite und der Wärmeübertragungsfläche sowie unabhängig von der Spaltgeometrie das Wärmeleitmaterial einzubringen und den Hohlraum vollständig damit zu befüllen. Vor allem eignet sich das erfindungsgemäße Verfahren auch bei sehr großflächigen Batteriemodulseiten bzw. Wärmeübertragungsflächen, die sich mit konventionellen Methoden, also beim vorherigen Einbringen des Wärmeleitmaterials, nur sehr schwer bis gar nicht verpressen lassen würden. Mittels des erfindungsgemäßen Verfahrens ist es also möglich, schnell, sicher, blasenfrei und vollständig den besagten Hohlraum mit einem Wärmeleitmaterial zu befüllen, ohne dabei das Batteriemodul und die Wärmeübertragungsfläche der Aufnahmestruktur in Mitleidenschaft zu ziehen.

Mittels des erfindungsgemäßen Verfahrens ist es zudem möglich, einen sehr taktgenauen Prozess zur Herstellung der thermischen Schnittstelle umzusetzen. Zudem können mittels des erfindungsgemäßen Verfahrens grundsätzlich jegliche Spaltgeometrien mit dem Wärmeleitmaterial befüllt werden. Das erfindungsgemäße Verfahren lässt sich zudem sehr einfach automatisieren. Zudem ist es möglich, den besagten Hohlraum besonders homogen mit dem Wärmeleitmaterial und vollständig zu befüllen, auch wenn Spaltmaße und entsprechende Toleranzen variieren sollten. Insgesamt wird also eine Lösung bereitgestellt, mittels welcher die thermische Schnittstelle in der Batterie besonders einfach und effektiv bereitgestellt werden kann.

Eine mögliche Ausführungsform der Erfindung sieht vor, dass der Hohlraum so lange mit dem Wärmeleitmaterial befüllt wird, bis das Wärmeleitmaterial an der Auslassöffnung detektiert wird. Im Bereich der Auslassöffnung kann beispielsweise ein optischer Sensor oder auch ein anderer Sensor angeordnet werden bzw. sein, mittels welchem das Wärmeleitmaterial detektiert werden kann. So ist es möglich, genau nur so viel vom Wärmeleitmaterial in den Hohlraum einzubringen, bis dieser vollständig mit dem Wärmeleitmaterial befüllt wurde.

Eine weitere mögliche Ausführungsform der Erfindung sieht vor, dass als die Abdichtung ein Klebstoff aufgetragen wird, welcher nach dem Montieren des Batteriemoduls die Batteriemodulseite und die Wärmeübertragungsfläche miteinander verklebt. Die Abdichtung erfüllt in diesem Fall also gleich zwei Funktionen auf einmal. Zum einen sorgt sie dafür, den besagten Hohlraum zwischen der Batteriemodulseite und der Wärmeübertragungsfläche nach der Montage des Batteriemoduls zumindest so abzudichten, dass das Wärmeleitmaterial während der Einbringung des Wärmeleitmaterials nur durch die zumindest eine Auslassöffnung entweichen kann. Zudem sorgt die Abdichtung in dem Fall noch dafür, dass die Batteriemodulseite zuverlässig an der Wärmeübertragungsfläche fixiert wird. Die Abdichtung kann beispielsweise als geschäumte Dichtung ausgebildet sein. Die Abdichtung kann beispielsweise auch aus einem Einkomponenten-Butyl, Einkomponenten- oder Zweikomponenten-MS-Polymer, Silikon, Polyurethan oder Schmelzklebstoff (thermoplastisch oder reaktiv) bestehen. Die Form der Abdichtung kann an die gegebenen Randbedingungen angepasst werden, sodass die linienförmige flexible Abdichtung nach ihrem Auftrag beispielsweise einen Halbkreis bildet, ein Rechteck, ein Dreieck oder dergleichen. Zudem ist die Gestaltung der Abdichtung flexibel möglich, um so auf jeweilige Toleranzen der Fügepartner zu reagieren, also insbesondere auf jeweilige Toleranzen des Batteriemoduls und der Aufnahmestruktur. Zudem kann die Abdichtung jederzeit in ihrer Form, Höhe und Ausführung an jeweilige Toleranzen und Formen des Batteriemoduls sowie der Aufnahmestruktur angepasst werden. Je nach Strömungsverlauf des Wärmeleitmaterials kann die Form der Abdichtung zudem individuell angepasst werden.

Gemäß einer weiteren möglichen Ausführungsform ist es vorgesehen, dass die Batteriemodulseite zwei Einlassöffnungen und zwei Auslassöffnungen aufweist, wobei die Abdichtung so aufgetragen wird, dass der nach dem Montieren des Batteriemoduls gebildete Hohlraum in ein erstes Teilvolumen und in ein zweites Teilvolumen aufgeteilt wird, wobei je eine der Einlassöffnungen und je eine der Auslassöffnungen in die jeweiligen Teilvolumina mündet. Auf diese Weise ist es unter anderem möglich, die jeweiligen Teilvolumina besonders schnell mit dem Wärmeleitmaterial zu befüllen. Zudem kann es vorteilhaft sein, zwei der Einlassöffnungen und zwei der Auslassöffnungen vorzusehen, wenn die Batteriemodulseite und die Wärmeübertragungsfläche einen relativ großen Flächeninhalt aufweisen. Dadurch ist es möglich, die Fließwege relativ kurz zu gestalten und mehr Wärmeleitmaterial pro Zeiteinheit einzufüllen. Ganz allgemein lassen sich die zwei Teilvolumina einfacher homogen befüllen, als ein einziges großes Volumen bezogen auf den zu befüllenden Hohlraum.

In weiterer möglicher Ausgestaltung der Erfindung ist es vorgesehen, dass die Abdichtung so aufgetragen wird, dass sich die Teilvolumina ausgehend von den jeweiligen Einlassöffnungen zu den Auslassöffnungen hin verjüngen. Die Teilvolumina können beispielsweise trichterförmig ausgebildet sein. Dadurch, dass sich die Teilvolumina ausgehend von den jeweiligen Einlassöffnungen zu den jeweiligen Auslassöffnungen hin verjüngen, wird eine besonders gute und homogene Befüllung der jeweiligen Teilvolumina mit dem Wärmeleitmaterial begünstigt.

Eine weitere mögliche Ausführungsform der Erfindung sieht vor, dass das Wärmeleitmaterial vor dem Befüllen des Hohlraums erwärmt wird, beispielsweise auf eine Temperatur von 60°C. Die Temperatur, auf welche das Wärmeleitmaterial erwärmt wird, kann in Abhängigkeit von der temperaturabhängigen Viskosität des Wärmeleitmaterials so eingestellt werden, dass sich die schnelle und homogene Befüllung besonders gut realisieren lässt. Der Erfindung liegt diesbezüglich insbesondere die Erkenntnis zugrunde, dass es einen starken Zusammenhang zwischen der Viskosität des Wärmeleitmaterials und der Temperatur des Wärmeleitmaterials gibt. Die Befüllung des Hohlraumes durch heiße Luft garantiert einen konstanten Prozess und eine konstante Prozesszeit durch die Unabhängigkeit von der Temperatur des Batteriemoduls, welche beispielsweise durch Lagerung und Transport bei unterschiedlichen Jahreszeiten, wie z.B. im Sommer oder Winter, schwanken kann .

Gemäß einer weiteren möglichen Ausführungsform der Erfindung ist es vorgesehen, dass jeweilige den Hohlraum begrenzende Bereiche der Batteriemodulseite und der Wärmeübertragungsfläche vor dem Befüllen mit dem Wärmeleitmaterial temperiert werden, indem heiße Luft, insbesondere mit einer Temperatur von 60°C, durch die zumindest eine Einlassöffnung oder Auslassöffnung eingeblasen wird. Beispielsweise kann eine metallische Düse außenseitig am Einlasskanal aufgesetzt werden, um die heiße Luft in den Hohlraum einzublasen. Der Hohlraum wird also vorgeheizt, genauso die Batteriemodulseite und die Wärmeübertragungsfläche. Dadurch kann verhindert werden, dass beim Einbringen des Wärmeleitmaterials dieses beim Fließen von der Einlassöffnung in Richtung der Auslassöffnung abkühlt. Denn dies würde dazu führen, dass die Viskosität ansteigt, was wiederum das homogene und schnelle Befüllen des Hohlraums erschweren würde. Die Dauer der Beheizung mit der heißen Luft kann beispielsweise so gewählt werden, dass beispielsweise während des Befüllvorgangs mit dem Wärmeleitmaterial sichergestellt werden kann, dass weder die Batteriemodulseite noch die Wärmeübertragungsfläche sich so sehr abkühlen und somit auch das Wärmeleitmaterial, dass dieses einen Grenzwert hinsichtlich einer vorgegebenen Viskosität überschreitet.

Gemäß einer weiteren möglichen Ausführungsform der Erfindung ist es vorgesehen, dass vor dem Befüllen des Hohlraums mit dem Wärmeleitmaterial ein Gleitöl durch die zumindest eine Einlassöffnung oder Auslassöffnung in den Hohlraum injiziert wird. Insbesondere bei einem sehr schlecht fließenden Wärmeleitmaterial und/oder sehr schmalen Spalten kann es von Vorteil sein, zusätzlich beispielsweise mittels einer Injektionsdüse das mit dem Wärmeleitmaterial kompatible Gleitöl einzufüllen. So können insbesondere Oberflächenrauhigkeiten sowohl an der Batteriemodulseite als auch an der Wärmeübertragungsfläche ausgeglichen werden. Dies gilt gleichermaßen für den Einlasskanal und den Auslasskanal. Das Gleitöl kann so eingebracht werden, dass sämtliche den Hohlraum begrenzende Flächen mit dem Gleitöl benetzt werden. Dies kann das schnelle und homogene Befüllen des Hohlraums mit dem Wärmeleitmaterial erheblich begünstigen. Wenn das Gleitöl zudem vor dem Injizieren auf eine vorgegebene Temperatur temperiert wird, beispielsweise auf eine Temperatur von 60°C, können zudem die Batteriemodulseite und die Wärmeübertragungsfläche aufgeheizt werden, sodass das Wärmeleitmaterial beim Einbringen in den Hohlraum nicht oder zumindest kaum abkühlt und die Viskosität zunimmt.

Eine weitere mögliche Ausführungsform der Erfindung sieht vor, dass während der Befüllung des Hohlraums mit dem Wärmeleitmaterial ein Unterdruck an der zumindest einen Auslassöffnung aufgebracht wird. Um das Fließverhalten des Wärmeleitmaterials zu steuern und insbesondere luftblasenfrei durch den Hohlraum zu fördern, kann es also vorgesehen sein, an der Auslassöffnung einen Unterdruck anzulegen, beispielsweise mittels einer geeigneten Düse. Das in den Hohlraum eingebrachte Wärmeleitmaterial wird also in Richtung der Auslassöffnung gesaugt, ebenso im Hohlraum vorhandene Luft. Dies begünstigt eine besonders schnelle und blasenfreie Befüllung des Hohlraums mit dem Wärmeleitmaterial.

In weiterer möglicher Ausgestaltung der Erfindung ist es vorgesehen, dass der Unterdruck solange aufgebracht wird, bis das Wärmeleitmaterial an der zumindest einen Auslassöffnung detektiert wird. Der aufgebrachte Unterdruck wird also erst dann abgeschaltet, wenn das Wärmeleitmaterial an der zumindest einen Auslassöffnung detektiert wird. Gleichzeitig kann es vorgesehen sein, dass die Einbringung des Wärmeleitmaterials zeitgleich gestoppt wird. So kann sichergestellt werden, dass nur so viel Wärmeleitmaterial in den Hohlraum eingebracht wird, bis dieser vollständig mit dem Wärmeleitmaterial ausgefüllt wurde.

Gemäß einer weiteren möglichen Ausführungsform der Erfindung ist es vorgesehen, dass das Wärmeleitmaterial aus zumindest zwei Komponenten hergestellt wird, wobei die zwei Komponenten mittels eines Extruders zu dem Wärmeleitmaterial vermischt werden, welches anschließend zum Befüllen des Hohlraums der zumindest einen Einlassöffnung zugeführt wird. Bei Wärmeleitmaterialien, insbesondere wenn diese eine besonders hohe Wärmeleitfähigkeit aufweisen sollen, ist es gängig, dass diese aus einer flüssigen oder pastösen Komponente und aus Feststoffpartikeln hergestellt werden. Der Erfindung liegt dabei die Erkenntnis zugrunde, dass es bei längerer Lagerung eines solchen Wärmeleitmaterials dazu kommen kann, dass schwerkraftbedingt die festen Komponenten innerhalb der flüssigen oder pastösen Komponente absacken. In Folge dessen würde kein homogenes Wärmeleitmaterial vorliegen, was sich negativ auf die Wärmeleiteigenschaften des Wärmeleitmaterials und auf das Fließverhalten auswirken würde. Dem wird entgegengewirkt, indem die zwei Komponenten mittels des Extruders zumindest im Wesentlichen kurz vor dem Befüllen des Hohlraums erst vermischt und anschließend über die Einfüllöffnung dem Hohlraum zugeführt werden. Dadurch kann sichergestellt werden, dass auch im Wärmeleitmaterial vorhandene feste Komponenten homogen innerhalb des Wärmeleitmaterials verteilt vorliegen. So kann eine gleichbleibende Qualität hinsichtlich des Wärmeleitmaterials und der Ausbildung der thermischen Schnittstelle innerhalb der Batterie sichergestellt werden.

Die erfindungsgemäße Batterie für ein Kraftfahrzeug umfasst wenigstens ein Batteriemodul mit zumindest einem Einlasskanal, welcher an einer Batteriemodulseite in zumindest einer Auslassöffnung für ein Wärmeleitmaterial mündet, und mit einem Auslasskanal, welcher an der Batteriemodulseite zumindest in einer Auslassöffnung für das Wärmeleitmaterial mündet. Die Batterie umfasst zudem eine Aufnahmestruktur mit einem eine Wärmeübertragungsfläche aufweisenden Aufnahmebereich, in welchem das Batteriemodul in einer bestimmungsgemäßen Einbaulage montiert ist. Zudem umfasst die Batterie wenigstens eine zwischen der Batteriemodulseite und der Wärmeübertragungsfläche angeordnete flexible linienförmige Abdichtung, welche einen mit dem Wärmeleitmaterial befüllten Hohlraum abdichtet, wobei das in den Hohlraum eingebrachte Wärmeleitmaterial eine thermische Schnittstelle bildet. Die erläuterten möglichen Ausführungsformen des Verfahrens sind auch als mögliche Ausführungsformen der Batterie und umgekehrt anzusehen, wobei die Batterie insbesondere Mittel aufweist, welche die Durchführung der Verfahrensschritte ermöglichen.

Weitere mögliche Vorteile, Merkmale und Einzelheiten der Erfindung ergeben sich aus der nachfolgenden Beschreibung möglicher Ausführungsbeispiele sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine schematische Schnittansicht einer Batterie für ein Kraftfahrzeug, in welcher ein an einer Aufnahmestruktur angeordnetes Batteriemodul zu erkennen ist, wobei zwischen einer Batteriemodulseite und einer Wärmeübertragungsfläche der Aufnahmestruktur ein Spalt vorhanden ist;
- Fig. 2: eine weitere schematische Schnittansicht der Batterie, wobei zwischen der Batteriemodulseite und der Wärmeübertragungsfläche eine flexible linienförmige Abdichtung angeordnet ist, welche innerhalb des Spalts einen Hohlraum zwischen der Batteriemodulseite und der Wärmeübertragungsfläche einschließt;
- Fig. 3: eine weitere schematische Schnittansicht der Batterie, wobei der Hohlraum von einem Wärmeleitmaterial ausgefüllt wird;
- Fig. 4: eine schematische Draufsicht auf die Batteriemodulseite, welche in einem von der flexiblen linienförmigen Abdichtung eingeschlossenen Bereich eine Einlassöffnung und eine Auslassöffnung für das Wärmeleitmaterial aufweist;
- Fig. 5: eine schematische Draufsicht auf eine weitere mögliche Ausführungsform der Batteriemodulseite, welche in dem von der flexiblen linienförmigen Abdichtung eingeschlossenen Bereich zwei Einlassöffnungen für das Wärmeleitmaterial und zwei Auslassöffnungen für das Wärmeleitmaterial aufweist;
- Fig. 6: eine schematische Draufsicht auf eine weitere mögliche Ausführungsform der Batteriemodulseite, wobei die flexible linienförmige Abdichtung zwei rechteckige Bereiche einschließt, welche jeweils eine Einlassöffnung und eine Auslassöffnung für das Wärmeleitmaterial aufweisen;
- Fig. 7: eine schematische Draufsicht auf eine weitere mögliche Ausführungsform der Batteriemodulseite, wobei die flexible linienförmige Abdichtung zwei trichterförmige Bereiche einschließt, welche jeweils eine Einlassöffnung und eine Auslassöffnung für das Wärmeleitmaterial aufweisen.

In den Figuren sind gleiche oder funktionsgleiche Elemente mit den gleichen Bezugszeichen versehen worden.

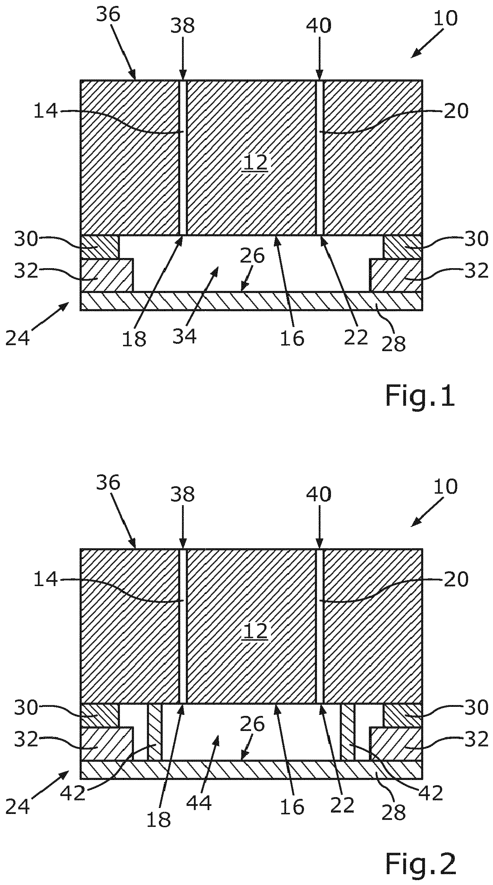

Eine Batterie 10 für ein Kraftfahrzeug ist in einer schematischen Schnittansicht in Fig. 1 gezeigt. Im hier gezeigten Fall wurde die Batterie 10 noch nicht fertiggestellt. Bei der Batterie 10 kann es sich insbesondere um eine Hochvoltbatterie handeln. Die Batterie 10 umfasst wenigstens ein Batteriemodul 12, welches mehrere hier nicht näher dargestellte Batteriezellen aufweisen kann. Zudem kann die Batterie 10 auch mehrere solcher Batteriemodule 12 aufweisen, wobei die nachfolgenden Erläuterungen in analoger Weise für die hier nicht dargestellten weiteren Batteriemodule 12 zutreffen können. Das Batteriemodul 12 umfasst einen Einlasskanal 14, welcher an einer Batteriemodulseite 16 in zumindest einer Einlassöffnung 18 für ein Wärmeleitmaterial mündet. Zudem umfasst das Batteriemodul 12 zumindest einen Auslasskanal 20, welcher an der Batteriemodulseite 16 in zumindest einer Auslassöffnung 22 für das Wärmeleitmaterial mündet.

Die Batterie 10 umfasst zudem eine Aufnahmestruktur 24, bei welcher es sich um einen Batterierahmen oder dergleichen handeln kann. Die Aufnahmestruktur 24 umfasst einen eine Wärmeübertragungsfläche 26 aufweisenden und hier nicht näher bezeichneten Aufnahmebereich, an welchem das Batteriemodul 12 in einer bestimmungsgemäßen Einbaulage montiert ist. Die Wärmeübertragungsfläche 26 kann beispielsweise zu einer Kühlplatte 28 gehören, die mit einem Kühlmedium durchströmt werden kann, um überschüssige Wärme von dem Batteriemodul 12 abzuführen.

Das Batteriemodul 12 weist mehrere Anbindungsbereiche 30 auf, wobei die Aufnahmestruktur 24 ihrerseits mehrere Anbindungsbereiche 32 aufweist. Die Anbindungsbereiche 30, 32 dienen dazu, das Batteriemodul 12 in der bestimmungsgemäßen Einbaulage an der Aufnahmestruktur 24 zu befestigen, beispielsweise durch Verschrauben und/oder Verschweißen. In der bestimmungsgemäßen Einbaulage des Batteriemoduls 12 ergibt sich ein Spalt 34 zwischen der Batteriemodulseite 16 und der Wärmeübertragungsfläche 26. Die Geometrie, das Volumen und insbesondere die Höhe des Spalts 34 können toleranzbedingt relativ stark variieren. Beispielsweise können sich fertigungsbedingt unterschiedliche Welligkeiten an der Wärmeübertragungsfläche 26 und/oder der Batteriemodulseite 16 einstellen. Fertigungsbedingt kann es zudem zu Maßschwankungen und Lageschwankungen sowohl beim Batteriemodul 12 als auch bei der Aufnahmestruktur 24 kommen. Beispielsweise kann die Lage der Anbindungsbereiche 30, 32 toleranzbedingt variieren, was sich insbesondere auch auf die Höhe des sich einstellenden Spalts 34 auswirken kann.

An einer Oberseite 36 des Batteriemoduls 12 befinden sich eine Einfüllöffnung 38 und eine Austrittsöffnung 40 für das bereits erwähnte Wärmeleitmaterial. Das Wärmeleitmaterial kann also durch Einfüllöffnung 38 in den Einlasskanal 14 injiziert werden und durch die Einlassöffnungen 18 in den daran angrenzenden Spalt 34 gelangen. Durch die ebenfalls an den Spalt 34 angrenzende Auslassöffnung 22 kann das Wärmeleitmaterial durch die Auslassöffnung 22 in den Auslasskanal 20 bis zur Austrittsöffnung 40 gelangen. Wie nachfolgend noch erläutert wird, wird nicht der gesamte Spalte 34 mit dem Wärmeleitmaterial befüllt, um eine thermische Schnittstelle zwischen dem Batteriemodul 12 und der Wärmeübertragungsfläche 26 herzustellen.

Damit überschüssige Wärme gut von dem Batteriemodul 12, insbesondere von hier nicht dargestellten Batteriezellen des Batteriemoduls 12, über die Wärmeübertragungsfläche 26 abgeführt werden kann, ist es wichtig, eine zuverlässige wärmeleitende Verbindung zwischen der Batteriemodulseite 16 und der Wärmeübertragungsfläche 26 zu realisieren. Anhand der nachfolgenden Figuren wird ein Verfahren zum Herstellen einer thermischen Schnittstelle innerhalb der Batterie 10 näher erläutert.

In Fig. 2 ist die Batterie 10 in einer weiteren schematischen Schnittansicht gezeigt, wobei zwischen der Batteriemodulseite 16 und der Wärmeübertragungsfläche 26 eine flexible linienförmige Abdichtung 42 angeordnet ist, welche innerhalb des Spalts 34, welcher hier nicht näher bezeichnet wurde, einen Hohlraum 44 zwischen der Batteriemodulseite 16 und der Wärmeübertragungsfläche 26 einschließt. Die Abdichtung 42 kann einen geschlossenen Linienzug bzw. eine geschlossene Linie bilden, z.B. kreisförmig, oval, rechteckig oder dergleichen sein.

Die flexible linienförmige Abdichtung 42 wird vor der Montage des Batteriemoduls 12 an der Batteriemodulseite 16 oder an der Wärmeübertragungsfläche 26 angebracht bzw. aufgetragen. Erst danach wird das Batteriemodul 12 an der Aufnahmestruktur 24 angeordnet und in der bestimmungsgemäßen Einbaulage fixiert, indem beispielsweise die Anbindungsbereiche 30, 32 miteinander verschraubt und/oder verschweißt werden.

Die Abdichtung 42 wird so dick bzw. so hoch aufgetragen, dass diese höher bzw. dicker als der Spalt 34 (siehe Fig. 1) ist. In Folge dessen wird die Abdichtung 42 beim Montieren des Batteriemoduls 12 komprimiert bzw. ein wenig verpresst. Dadurch können unterschiedlichste Toleranzen beim Batteriemodul 12 und der Aufnahmestruktur 24 ausgeglichen werden. Bei der flexiblen linienförmigen Abdichtung 42 kann es sich beispielsweise um eine Art Dichtraupe handeln. Bei der Abdichtung 42 kann es sich zudem beispielsweise um eine Art geschäumte Dichtung handeln. Anstelle einer geschäumten Dichtung kann auch vor der Montage des Batteriemoduls 12 eine Art Raupe aus einem geeigneten Dichtstoff auf die Batteriemodulseite 16 oder die Wärmeübertragungsfläche 26 aufgebracht werden. Mögliche Dichtstoffe sind beispielsweise Einkomponenten-Butyle, Einkomponenten- oder Zweikomponenten-MS-Polymere, Silikone, Polyurethane, Schmelzkleber oder dergleichen. Die verwendeten Abdichtmaterialien können selbst wärmeleitfähige Eigenschaften haben. Durch die vorgesehene flexible linienförmige Abdichtung 42 wird der Hohlraum 44 so dicht abgeschlossen, dass durch die Einlassöffnung 18 eingebrachtes Wärmeleitmaterial nur noch durch die Auslassöffnung 22 aus dem Hohlraum 44 entweichen kann.

Nachdem das Batteriemodul 12 in seiner bestimmungsgemäßen Einbaulage unter Komprimierung der Abdichtung 42 montiert wurde, wird der Hohlraum 44 durch die Einfüllöffnung 38 und somit durch die Einlassöffnung 18 mit dem besagten Wärmeleitmaterial befüllt. Gemäß der vorliegend gewählten Darstellung fließt dann das Wärmeleitmaterial im Hohlraum 44 nach rechts bis dieser vollständig befüllt wurde und kann durch die Auslassöffnung 22 austreten.

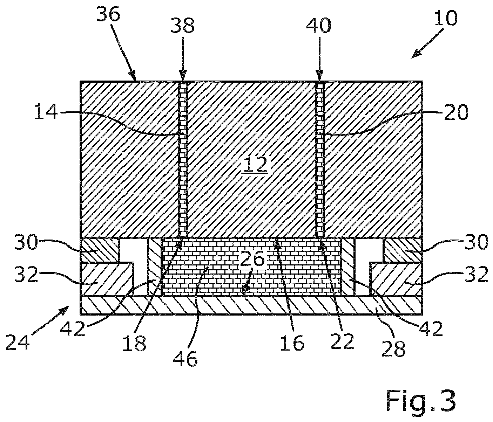

In Fig. 3 ist die Batterie 10 in einer weiteren schematischen Schnittansicht gezeigt, wobei der Hohlraum 44 (hier mit keinem Bezugszeichen versehen) nun vollständig mit dem besagten Wärmeleitmaterial 46 ausgefüllt wurde. Das Wärmeleitmaterial 46 kann solange durch die Einfüllöffnung 38 eingefüllt werden, bis beispielsweise das Wärmeleitmaterial 46 an der Auslassöffnung 22 detektiert wird. Dafür kann ein hier nicht dargestellter Sensor, beispielsweise ein optischer Sensor, vorgesehen sein. So kann sichergestellt werden, dass nicht zu viel Wärmeleitmaterial 46 eingefüllt wird. Sollte dies dennoch geschehen, bietet der Auslasskanal 20 auch noch einen gewissen Puffer zum Aufnehmen des überschüssigen Wärmeleitmaterials 46, ohne dass dieses aus der Austrittsöffnung 40 austritt. Alternativ oder zusätzlich wäre es beispielsweise auch möglich, im Bereich der Austrittsöffnung 40 zu überwachen, ob und wann dort das Wärmeleitmaterial 46 ankommt, um spätestens dann den Befüllvorgang zu stoppen.

Das Wärmeleitmaterial 46 kann vor dem Befüllen des Hohlraums 44 erwärmt werden, beispielsweise auf eine Temperatur von 60°C. Dadurch kann die Viskosität des eingesetzten Wärmeleitmaterials 46 soweit herabgesetzt werden, dass das Wärmeleitmaterial 46 problemlos durch den Einlasskanal 14 fließen und den Hohlraum 44 besonders schnell und homogen befüllen kann. Jeweilige den Hohlraum 44 begrenzende Bereiche der Batteriemodulseite 16 und der Wärmeübertragungsfläche 26 können zudem vor dem Befüllen mit dem Wärmeleitmaterial 46 temperiert werden. Dies kann beispielsweise dadurch geschehen, indem heiße Luft, beispielsweise mit einer Temperatur von bis zu 60°C, durch die Einfüllöffnung 38 eingefüllt wird, welche durch den Einlasskanal 14 und die Einlassöffnung 18 in den noch nicht befüllten Hohlraum 44 gelangt und in Folge dessen die Batteriemodulseite 16 und die Wärmeübertragungsfläche 26 entsprechend aufheizt. Die Luft strömt dann durch die Auslassöffnung 22 und den Auslasskanal 20 bis zur Austrittsöffnung 40 und verlässt so wiederum das Batteriemodul 12. Durch entsprechende Temperierung der Batteriemodulseite 16 und der Wärmeübertragungsfläche 26 sowie auch des Einlasskanals 14 wird der Befüllvorgang mit dem Wärmeleitmaterial 46 begünstigt. Denn dadurch kann sichergestellt werden, dass das Wärmeleitmaterial 46 während des Befüllvorgangs kaum oder gar nicht abkühlt, und somit die Viskosität des Wärmeleitmaterials 46 während des Einfüllvorgangs nicht zunimmt. Dadurch kann der Befüllvorgang besonders homogen erfolgen.

Zudem ist es auch möglich, dass vor dem Befüllen des Hohlraums 44 mit dem Wärmeleitmaterial 46 ein Gleitöl durch die Einlassöffnung 18 in den Hohlraum 44 eingefüllt wird. Das Gleitöl ist von seinen Eigenschaften her so gewählt, dass es mit dem Wärmeleitmaterial 46 kompatibel ist, dieses also insbesondere nicht schädigt oder zersetzt. Das Gleitöl kann so eingebracht werden, dass sämtliche den Hohlraum 44 begrenzende Flächen, insbesondere die Batteriemodulseite 16 und die Wärmeübertragungsfläche 26 mit dem Gleitöl benetzt werden. Dadurch können insbesondere Oberflächenrauhigkeiten an der Batteriemodulseite 16 und der Wärmeübertragungsfläche 26 ausgeglichen werden, sodass das Wärmeleitmaterial 46 mit besonders geringer Reibung strömen kann. Zudem ist es möglich, das Gleitöl vor dem Einbringen auf eine vorgegebene Temperatur zu erwärmen, beispielsweise auf eine Temperatur von 60°C. Dadurch können insbesondere die Batteriemodulseite 16 und die Wärmeübertragungsfläche 26 so temperiert werden, dass beim Einbringen bzw. Injizieren des Wärmeleitmaterials 46 sich dieses gar nicht oder nicht so stark abkühlt, dass die Viskosität des Wärmeleitmaterials 46 so weit ansteigt, dass der Befüllvorgang dadurch behindert wird.

Zudem ist es auch möglich, während der Befüllung des Hohlraums 44 mit dem Wärmeleitmaterial 46 einen Unterdruck an der Auslassöffnung 22 aufzubringen. Dafür kann beispielsweise eine hier nicht dargestellte Düse an der Austrittsöffnung 40 angebracht werden, welche den Unterdruck aufbaut. Dadurch kann das Fließverhalten des Wärmeleitmaterials 46 gesteuert werden. Zudem wird dadurch begünstigt, das Wärmeleitmaterial 46 blasenfrei zu fördern. Der Unterdruck kann solange aufgebracht werden, bis das Wärmeleitmaterial 46 beispielsweise an der Auslassöffnung 22 detektiert wird. Die Temperierung des Wärmeleitmaterials 46, der Batteriemodulseite 16, der Wärmeübertragungsfläche 26 sowie der Luft und des Gleitöls sowie die Stärke des aufgebrachten Unterdrucks können an die Eigenschaften des Wärmeleitmaterials 46 und an die Eigenschaften des Batteriemoduls 12 sowie der Wärmeübertragungsfläche 26 angepasst werden. Die besagten Parameter können so gewählt werden, dass ein sicherer und stabiler Prozess sichergestellt werden kann. Dies kann beispielsweise durch eine entsprechende Anzahl an Versuchen gewährleistet werden, bei welchen die besagten Parameter variiert werden.

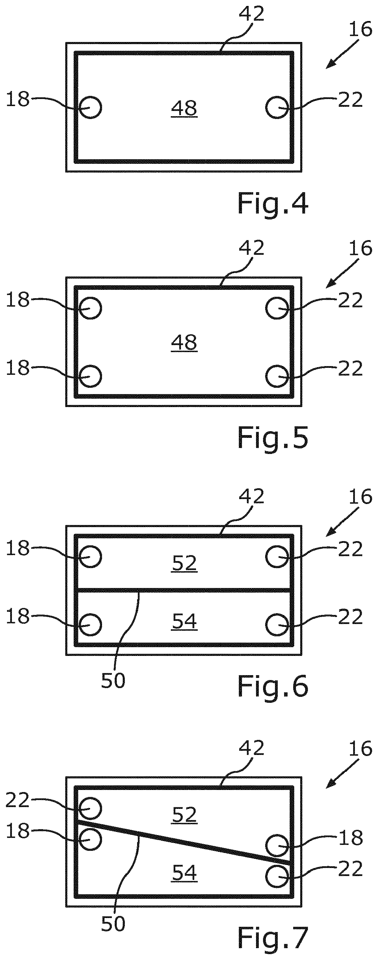

Das Wärmeleitmaterial 46 kann beispielsweise aus zwei Komponenten hergestellt werden, wobei die zwei Komponenten mittels eines hier nicht dargestellten Extruders zu dem Wärmeleitmaterial 46 vermischt werden, wobei das Wärmeleitmaterial 46 anschließend, beispielsweise unmittelbar nach dem Vermischen, zum Befüllen des Hohlraums 44 der Einlassöffnung 18 zugeführt werden kann. Dadurch kann sichergestellt werden, dass das Wärmeleitmaterial 46 sich nicht durch längere Lagerung entmischt, was insbesondere auftreten könnte, wenn die besagten beiden Komponenten des Wärmeleitmaterials 46 einerseits aus einer flüssigen Komponente und andererseits aus Feststoffpartikeln bestehen. In Fig. 4 ist die Batteriemodulseite 16 in einer schematischen Draufsicht gezeigt. Vorliegend ist die flexible linienförmige Abdichtung 42 zu erkennen, welche einen Bereich 48 der Batteriemodulseite 16 einschließt. Innerhalb des Bereichs 48 sind die Einlassöffnung 18 und die Auslassöffnung 22 angeordnet. Die Formgebung der Abdichtung 42 ist vorliegend rechteckig, wobei dies lediglich beispielhaft zu verstehen ist.

In Fig. 5 ist eine weitere mögliche Ausführungsform der Batteriemodulseite 16 in einer schematischen Draufsicht gezeigt. Im hier gezeigten Fall umfasst die Batteriemodulseite 16 zwei der Einlassöffnungen 18 und zwei der Auslassöffnungen 22, welche sich wiederum in dem Bereich 48 befinden, welcher von der flexiblen linienförmigen Abdichtung 42 begrenzt wird. Das Batteriemodul 12 kann in dem Fall auch zwei der Einfüllöffnungen 38 und zwei der Austrittsöffnungen 40 sowie zwei der Einlasskanäle 14 und zwei der Auslasskanäle 20 aufweisen. Es ist aber auch möglich, dass das Batteriemodul 12 nur eine Einfüllöffnung 38 mit einem Einlasskanal 14 aufweist, welcher sich dann zu den zwei Einlassöffnungen 18 hin verzweigt. Analog kann dies für die Austrittsöffnung 40 und den Auslasskanal 20 bezüglich der beiden Auslassöffnungen 22 gelten.

In Fig. 6 ist eine weitere mögliche Ausführungsform der Batteriemodulseite 16 in einer schematischen Draufsicht gezeigt. Die flexible linienförmige Abdichtung 42 umfasst vorliegend einen Abschnitt 50, sodass die Abdichtung 42 einen ersten Bereich 52 und einen zweiten Bereich 54 einschließt, welche durch den Abschnitt 50 begrenzt werden. Die Bereiche 52, 54 weisen jeweils eine der Einlassöffnungen 18 und eine der Auslassöffnungen 22 auf. Die flexible linienförmige Abdichtung 42 wird also so aufgetragen, dass der nach dem Montieren des Batteriemoduls 12 gebildete Hohlraum 44 ein erstes Teilvolumen und ein zweites Teilvolumen aufweist, wobei die besagten Teilvolumina unterhalb bzw. benachbart zu den jeweiligen Bereichen 52, 54 angeordnet sind. Somit mündet je eine der Einlassöffnungen 18 und je eine der Auslassöffnungen 22 in die jeweiligen Teilvolumina des Hohlraums 44.

In Fig. 7 ist eine weitere mögliche Ausführungsform der Batteriemodulseite 16 in einer schematischen Draufsicht gezeigt. Die hier dargestellte Ausführungsform unterscheidet sich durch die Form der beiden Bereiche 52, 54 von der in Fig. 6 gezeigten Ausführungsform, was durch die Anordnung des Abschnitts 50 resultiert. Der Abschnitt 50, welcher für die Unterteilung in die beiden Bereiche 52, 54 sorgt, verläuft vorliegend so, dass die Bereiche 52, 54 trichterförmig ausgebildet werden. Die Bereiche 52, 54 verjüngen sich dabei jeweils ausgehend von der jeweiligen Einlassöffnung 18 hin zu der jeweiligen Auslassöffnung 22. Die Aufteilung in die beiden Bereiche 52, 54 sorgt wiederum dafür, dass der nach dem Montieren des Batteriemoduls 12 gebildete Hohlraum 44 in ein erstes Teilvolumen und in ein zweites Teilvolumen aufgeteilt wird, wobei sich die Teilvolumina entsprechend der Form der beiden Bereiche 52, 54 ausgehend von den jeweiligen Einlassöffnungen 18 hin zu den jeweiligen Auslassöffnungen 22 verjüngen. Dies begünstigt ein besonders schnelles, homogenes und blasenfreies Befüllen des Hohlraums 44 mit dem Wärmeleitmaterial 46.

### BEZUGSZEICHENLISTE

- 10: Batterie
- 12: Batteriemodul
- 14: Einlasskanal
- 16: Batteriemodulseite
- 18: Einlassöffnung
- 20: Auslasskanal
- 22: Auslassöffnung
- 24: Aufnahmestruktur
- 26: Wärmeübertragungsfläche
- 28: Kühlplatte
- 30: Anbindungsbereiche des Batteriemoduls
- 32: Anbindungsbereiche der Aufnahmestruktur
- 34: Spalt
- 36: Oberseite
- 38: Einfüllöffnung am Batteriemodul
- 40: Austrittsöffnung am Batteriemodul
- 42: flexible linienförmige Abdichtung
- 44: Hohlraum
- 46: Wärmeleitmaterial
- 48: ein am Batteriemodul von der Abdichtung eingeschlossener Bereich
- 50: Abschnitt der flexiblen linienförmigen Abdichtung
- 52: erster Bereich an der Batteriemodulseite
- 54: zweiter Bereich an der Batteriemodulseite

## Patentansprüche

1. Verfahren zum Herstellen einer thermischen Schnittstelle in einer Batterie (10) für ein Kraftfahrzeug, umfassend die Schritte:
- Bereitstellen wenigstens eines Batteriemoduls (12) mit zumindest einem Einlasskanal (14), welcher an einer Batteriemodulseite (16) in zumindest einer Einlassöffnung (18) für ein Wärmeleitmaterial (46) mündet, und mit zumindest einem Auslasskanal (20), welcher an der Batteriemodulseite (16) in zumindest einer Auslassöffnung (22) für das Wärmeleitmaterial (46) mündet;
- Bereitstellen einer Aufnahmestruktur (24) mit einem eine Wärmeübertragungsfläche (26) aufweisenden Aufnahmebereich zum Aufnehmen des Batteriemoduls (12) in einer bestimmungsgemäßen Einbaulage, in welcher zwischen der Batteriemodulseite (16) und der Wärmeübertragungsfläche (26) ein Spalt (34) besteht;
- Aufbringen wenigstens einer flexiblen linienförmigen Abdichtung (42) an der Batteriemodulseite (16) oder der Wärmeübertragungsfläche (26);
- Montieren des Batteriemoduls (12) in der bestimmungsgemäßen Einbaulage unter Komprimierung der Abdichtung (42), wonach diese innerhalb des Spalts (34) einen Hohlraum (44) zwischen der Batteriemodulseite (16) und der Wärmeübertragungsfläche (26) einschließt;
- Befüllen des Hohlraums (44) mit dem Wärmeleitmaterial (46) durch die Einlassöffnung (18), wobei das in den Hohlraum (44) eingebrachte Wärmeleitmaterial (46) die thermische Schnittstelle bildet.

2. Verfahren nach Anspruch 1,
**dadurch gekennzeichnet, dass**
der Hohlraum (44) so lange mit dem Wärmeleitmaterial (46) befüllt wird, bis das Wärmeleitmaterial (46) an der Auslassöffnung (22) detektiert wird.

3. Verfahren nach Anspruch 1 oder 2,
**dadurch gekennzeichnet, dass**
als die Abdichtung (42) ein Klebstoff aufgetragen wird, welcher nach dem Montieren des Batteriemoduls (12) die Batteriemodulseite (16) und die Wärmeübertragungsfläche (26) miteinander verklebt.

4. Verfahren nach einem der vorhergehenden Ansprüche,
**dadurch gekennzeichnet, dass**
die Batteriemodulseite (16) zwei Einlassöffnungen (18) und zwei Auslassöffnungen (22) aufweist, wobei die Abdichtung (42) so aufgetragen wird, dass der nach dem Montieren des Batteriemoduls (12) gebildete Hohlraum (44) in ein erstes Teilvolumen und in ein zweites Teilvolumen aufgeilt wird, wobei je eine der Einlassöffnungen (18) und je eine der Auslassöffnungen (22) in die jeweiligen Teilvolumina münden.

5. Verfahren nach Anspruch 4,
**dadurch gekennzeichnet, dass**
die Abdichtung (42) so aufgetragen wird, dass sich die Teilvolumina ausgehend von den jeweiligen Einlassöffnungen (18) zu den jeweiligen Auslassöffnungen (22) hin verjüngen.

6. Verfahren nach einem der vorhergehenden Ansprüche,
**dadurch gekennzeichnet, dass**
das Wärmeleitmaterial (46) vor dem Befüllen des Hohlraums (44) erwärmt wird, insbesondere auf eine Temperatur von 60°C.

7. Verfahren nach einem der vorhergehenden Ansprüche,
**dadurch gekennzeichnet, dass**
jeweilige den Hohlraum (44) begrenzende Bereiche (48, 52, 54) der Batteriemodulseite (16) und der Wärmeübertragungsfläche (26) vor dem Befüllen mit dem Wärmeleitmaterial (46) temperiert werden, indem heiße Luft, insbesondere mit einer Temperatur von bis zu 60°C, durch die zumindest eine Einlassöffnung (18) oder Auslassöffnung (22) eingeblasen wird.

8. Verfahren nach einem der vorhergehenden Ansprüche,
**dadurch gekennzeichnet, dass**
vor dem Befüllen des Hohlraums (44) mit dem Wärmeleitmaterial (46) ein Gleitöl durch die zumindest eine Einlassöffnung (18) oder Auslassöffnung (22) in den Hohlraum (44) injiziert wird.

9. Verfahren nach Anspruch 8,
**dadurch gekennzeichnet, dass**
das Gleitöl vor dem Injizieren auf eine vorgegebene Temperatur temperiert wird.

10. Verfahren nach einem der vorhergehenden Ansprüche,
**dadurch gekennzeichnet, dass**
während der Befüllung des Hohlraums (44) mit dem Wärmeleitmaterial (46) ein Unterdruck an der zumindest einen Auslassöffnung (22) aufgebracht wird.

11. Verfahren nach Anspruch 10,
**dadurch gekennzeichnet, dass**
der Unterdruck so lange aufgebracht wird, bis das Wärmeleitmaterial (46) an der zumindest einen Auslassöffnung (22) detektiert wird.

12. Verfahren nach einem der vorhergehenden Ansprüche,
**dadurch gekennzeichnet, dass**
das Wärmeleitmaterial (46) aus zumindest zwei Komponenten hergestellt wird, wobei die zwei Komponenten mittels eines Extruders zu dem Wärmeleitmaterial (46) vermischt werden, welches anschließend zum Befüllen des Hohlraums (44) der zumindest einen Einlassöffnung (18) zugeführt wird.

13. Batterie (10) für ein Kraftfahrzeug, umfassend
- wenigstens ein Batteriemodul (12) mit zumindest einem Einlasskanal (14), welcher an einer Batteriemodulseite (16) in zumindest einer Einlassöffnung (18) für ein Wärmeleitmaterial (46) mündet, und mit zumindest einem Auslasskanal (20), welcher an der Batteriemodulseite (16) in zumindest einer Auslassöffnung (22) für das Wärmeleitmaterial (46) mündet;
- eine Aufnahmestruktur (24) mit einem eine Wärmeübertragungsfläche (26) aufweisenden Aufnahmebereich, in welchem das Batteriemodul (12) in einer bestimmungsgemäßen Einbaulage montiert ist;
- wenigstens eine zwischen der Batteriemodulseite (16) und der Wärmeübertragungsfläche (26) angeordnete flexible linienförmige Abdichtung (42), welche einen mit dem Wärmeleitmaterial (46) befüllten Hohlraum (44) abdichtet, wobei das in den Hohlraum (44) eingebrachte Wärmeleitmaterial (46) eine thermische Schnittstelle bildet.
